# EUROPEAN PATENT SPECIFICATION

(11) **EP 1 973 089 B1**
(45) Date of publication and mention of the grant of the patent: **29.12.2010**
(21) Application number: 06823495.4
(22) Date of filing: 22.11.2006
(51) Int. Cl.: G09F 9/00, B29C 65/52, C09J 5/00, G02F 1/1333, B29L 11/00

(54) **PROCESS FOR PRODUCING DISPLAY AND METHOD OF LAMINATING**
PROZESS ZUR DISPLAY-HERSTELLUNG UND LAMINATIONSVERFAHREN
PROCEDE DE PRODUCTION ET PROCEDE D'ASSEMBLAGE D'UN DISPOSITIF D'AFFICHAGE

(30) Priority: 29.11.2005 JP 2005344302
(43) Date of publication of application: 24.09.2008
(73) Proprietor: Seiko Instruments Inc., Chiba-shi, Chiba 261-8507 (JP)
(72) Inventor: MATSUHIRA, Tsutomu, Chiba-shi Chiba; 261-8507 (JP)
(74) Representative: Cloughley, Peter Andrew
(86) International application number: PCT/JP2006/323268
(87) International publication number: WO 2007/063751

(56) References cited:
- EP-A- 0 789 295
- JP-A- 2 304 998
- JP-A- 02 304 998
- JP-A- 09 274 536
- JP-A- 2001 242 478
- JP-A- 2004 224 855
- JP-A- 2004 224 855
- JP-A- 2006 292 993
- Jürgen Falbe, Manfred Regitz: 1992, Georg Thieme Verlag , Stuttgart, New York , pages 4938-4939

## Description

### BACKGROUND OF THE INVENTION

### 1. Field of the Invention

The present invention relates to a method of bonding a transparent substrate and a substrate together with a liquid adhesive in a manner that brings the two into full-surface contact with each other. For example, the present invention relates to bonding a transparent cover plate of a cellular phone or other similar devices to a flat display such as a liquid crystal display device, a plasma display, an organic EL display, an inorganic EL display, or an FED, or bonding a touch panel to a flat display.

### 2. Description of the Related Art

A known method to place a transparent touch panel on a display panel is to fix the transparent touch panel to the perimeter of the display panel by adhesion provided by double-sided adhesive tape between 0.3 to 0.5 mm and 1 mm in thickness, or thicker. Another known method is to bond the display panel and the touch panel together in full-surface contact with the use of an optical adhesive (see, for example, JP 09-274536 A, which is hereinafter referred to as Patent Document 1).

A liquid crystal panel as a display screen of a cellular phone and a transparent cover plate over the display screen are assembled together with a 0.3 to 0.5-mm thick elastic member made of rubber or the like interposed between the two, in a non-transparent area formed by printing or the like between the perimeter of a display area of the liquid crystal panel and an outer area of the transparent cover plate which is outside the display area.

In cellular phones in particular, the demand for a thinner model which measures 0.2 mm or less between the transparent cover plate and the display panel is growing.

Employed for the transparent cover plate is an acrylic, polycarbonate or other transparent plastic material, or glass. The transparent cover plate is, in many cases, covered on the surface with a low reflective film made up of layers of materials to vary the refractive index in stages, or with an electromagnetic shield formed of copper, aluminum, or the like and having a grid-like etching pattern, or with a hard coat for preventing scratches. In the case of a glass cover plate, a film sheet for preventing cracking, a film sheet subjected to anti-glare treatment to prevent specular reflection, or the like is stuck over the glass surface. The transparent cover plate and the display element have a rectangular shape in most cases. Variations of the touch panel include resistive panels (analog resistive film type and digital resistive film type), capacitive (CAP) panels, and surface acoustic wave (SAW) panels.

Thinning the gap between the perimeter of the flat display and the transparent cover plate into 0.1 mm or less is difficult because it causes problems including the lowering of the impact resistance and the generation of Newton rings. Air bubbles can also be a problem in the case where an optical adhesive sheet is used to bond the touch panel or the transparent cover plate and the flat display together in full-surface contact. The air bubbles that are a problem are ones large enough to be visible to the human eye, about 100 µm or more in size. Bonding by lamination without allowing air bubbles to form is particularly difficult for a thicker and more rigid touch panel or transparent cover plate. With an optical adhesive sheet, air bubbles form also when one or both of the display and the transparent cover plate themselves are warped and become detached from each other due to some reliability test condition or use environment.

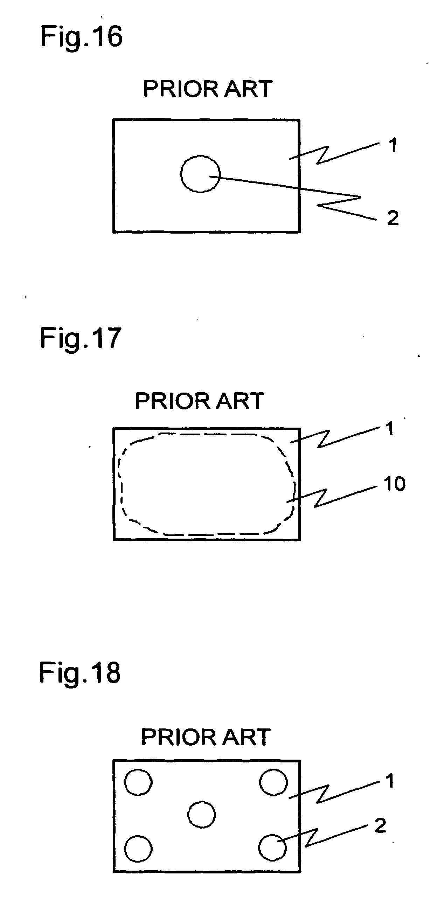

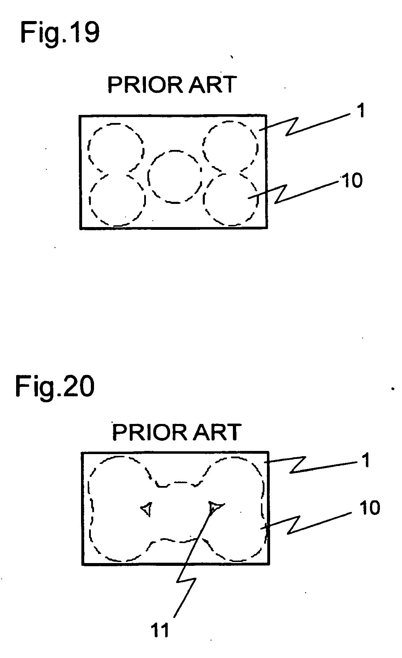

The warp is particularly common in Chip-on-Glass, where a driver IC is mounted directly to a glass substrate with the use of an anisotropic conductive film and heat from the mounting causes the IC and the glass to warp away from each other. When a driver IC 0. 5 mm in thickness and 2 × 20 mm in size is mounted to a non-alkali glass substrate with a thickness of 0.5 mm, the warp amounts to about 20 to 15 µm. The warp caused many samples prepared in this way and bonded by an optical adhesive sheet to peel beginning from an area near where the IC was mounted. In the case where the display and the transparent cover plate are bonded together in full-surface contact with the use of a liquid optical transparent adhesive which is cured by light such as UV or visible light, the warp of one or both of the two does not cause detachment from each other in a reliability test or a use environment as often. However, with a bonding method disclosed in Patent Document 1, filling the gap with the adhesive uniformly was difficult when the adhesive dripped only on the central part as shown in FIG. 16, and the shortage of the adhesive left the corners unfilled as shown in FIG. 17. If the adhesive is let drip on multiple spots as shown in FIG. 18 in an attempt to solve the shortage of adhesive in the corners, the gap is filled with the adhesive gradually in the course of the filling step as shown in FIGS. 19 and 20, but air is trapped between the adhesive-applied spots and forms air bubbles 11 in many cases.

Also, even air bubbles formed during bonding that are smaller than 100 µm in diameter cause conspicuous bright spots which look larger than the diameter of the air bubbles when the flat panel display is of reflective type and irradiated with intense outside light, or lit by backlight.

EP 0789295 discloses a display unit equipped with a transparent touch switch. At least an input area of the touch switch is pasted with a display surface of the display unit by clear adhesive. Clear adhesive whose refractive index after hardening is close to that of the liquid crystal display and the touch switch is used. Further, clear fillers are mixed in the clear adhesive.

JP 2-304998 discloses a method of adhering a hybrid thick film integrated circuit to a heat sink plate, in which a heat sink plate is coated with adhesive in a pattern and a ceramic board is placed thereon. The board is then pressurized, scrubbed, etc., thereby diffusing the adhesive over the whole face of the substrate.

JP 2004-224855 discloses a bonding method, in which first liquid drops are dropped at two positions at a specified distance. A second liquid drop is then dropped at a position which is on or near on a vertical line which crosses at right angles with a line passing through these two points and passes the central point of the two positions, provided that this position is nearer to the center of a substrate than the above two positions. The amounts of the first liquid drops and the second liquid drop and the distance between the first liquid drops and the second liquid drop are determined so that the widened area of the second liquid drop, widened by pinching it between two substrates, reaches the central point simultaneously with or faster than the widened area of the first liquid drops, widened by pinching them between the two substrates.

### SUMMARY OF THE INVENTION

According to an aspect of the present invention, there is provided a method of manufacturing a display device as defined in claim 1.

Suitably, the liquid adhesive is a UV-curable adhesive or a visible light-curable adhesive, and has a curing shrinkage percentage of 1 to 6%. Preferably, the transparent member is a touch panel, a plastic plate, or a glass plate.

### BRIEF DESCRIPTION OF THE DRAWINGS

In the accompanying drawings:
FIG. 1 is a top view of a transparent substrate;
FIG. 2 is a top view of the transparent substrate to which an adhesive is applied in dots according to the present invention;
FIG. 3 is a top view of the transparent substrate to which the adhesive is applied linearly according to the present invention;
FIG. 4 is a side view showing the transparent substrate and a flat display which are positioned with respect to each other according to the present invention;
FIG. 5 is a side view showing how the adhesive drips according to the present invention;
FIG. 6 is a side view showing a state in which the adhesive has come into contact with the flat display according to the present invention;
FIG. 7 is a top view showing a state in which the adhesive has come into contact with the flat display according to the present invention;
FIG. 8 is a top view showing the flat display smeared with the adhesive in a pattern in which the transparent substrate is applied with the adhesive according to the present invention;
FIG. 9 is a top view showing an initial state of filling with the adhesive according to the present invention;
FIG. 10 is a top view showing an intermediate state of filling with the adhesive according to the present invention;
FIG. 11 is a top view showing an end state of filling with the adhesive according to the present invention;
FIG. 12 is a side view showing a state in which the bonding has been completed according to the present invention;
FIG. 13 is a schematic diagram showing another adhesive application pattern according to the present invention;
FIG. 14 is a schematic diagram showing still another adhesive application pattern according to the present invention;
FIG. 15 is a graph showing diameters of air bubbles contained in the adhesive before and after curing according to the present invention;
FIG. 16 is a top view showing a transparent plate to which an adhesive is applied according to a conventional method;
FIG. 17 is a top view showing a state after filling of the gap between the transparent plate and a flat display with the adhesive is finished according to the conventional method;
FIG. 18 is a top view showing a transparent plate to which an adhesive is applied according to another conventional method;
FIG. 19 is a top view showing an initial state of filling of a gap between the transparent plate and a flat display according to the another conventional method; and
FIG. 20 is a top view showing an intermediate state of filling of the gap between the transparent plate and the flat display according to the another conventional method.

### DETAILED DESCRIPTION OF THE PREFERRED EMBODIMENT

The present invention provides a method of bonding a polygonal transparent plate and a plate-like member together with a transparent adhesive, and the method includes: applying a fixed amount of the liquid transparent adhesive member to a bonding surface of the transparent plate, or a bonding surface of the plate-like member, at least in multiple spots; and applying more adhesive in a manner that connects the spots of applied adhesive linearly, or includes the step of applying the adhesive in a continuous line and then in a dot or dots along the line in an amount larger than the one used for the linear adhesive application. The method further includes: reversing the transparent plate or the plate-like member to which the adhesive has been applied; letting the adhesive to cause drip bring the adhesive into contact with the opposite bonding surface and fill the gap further with the adhesive; and irradiating the adhesive with light from the transparent plate side to cure the adhesive.

Applying a fixed amount of the adhesive to parts of the bonding surface near the corners particularly helps to balance the amount of adhesive among different parts of the bonding surface and make the thickness of the applied adhesive even. Also, the problem of air bubbles due to air caught during the filling is solved by applying the adhesive in spots around the corners and at the center and then applying the adhesive linearly to connect the spots. The adhesive may be applied in one stroke by repeating applying the adhesive in a fixed amount, applying the adhesive linearly, further applying the adhesive in a fixed amount, and further applying the adhesive linearly. In the case of the single-stroke application, the linear adhesive application may go over the same place twice. After the adhesive application is finished, one of the two substrates to which the adhesive has been applied is reversed, causing the adhesive to drip slowly onto the opposite substrate. At the time the adhesive dripping from the spots around the corners and at the center comes into contact with the opposite substrate, the descending speed of the substrate to which the adhesive has been applied may be increased.

The present invention is equally effective for a transparent touch panel and a transparent cover plate, and can bond whichever of the two to a flat display by an adhesive layer of uniform thickness without generating air bubbles. With a UV-curable adhesive or a visible light-curable adhesive that has a curing shrinkage percentage of 1 to 6%, the shrinkage of the adhesive from curing does not cause the color to look uneven on the flat display, while air bubbles contained in the adhesive before curing become smaller as the adhesive shrinks from curing. The present invention can thus reduce air bubbles smaller than 100 µm in diameter.

In the case of a transparent plate that has a non-transparent area, the method of curing the adhesive by irradiating the adhesive with light from the front side of the transparent plate through the transparent plate is not effective since the non-transparent area prevents the light from reaching a part of the adhesive that overlaps with the non-transparent area. The part of the adhesive that overlaps with the non-transparent area can be cured by radiating light from a side of the transparent plate.

A method suitable to bond a rectangular transparent cover plate or touch panel to a flat display is as follows. A suitable viscosity of the adhesive is 3,000 to 2,000 cP. When the thickness of an adhesive layer that bonds the transparent cover plate (or touch panel) and the flat display together is set to about 100 µm, the amount of the adhesive to be applied, which is calculated with respect to the area of the bonding surface, is 0.0135 g/cm² ± 10%. The adhesive is applied to the bonding surface of the transparent cover plate in dots around the corners and at the center of the bonding surface. The applied adhesive is later caused to drip. The application amount per spot is calculated by dividing 50 to 80% of the total application amount into substantially equal parts. The remaining adhesive is applied linearly in a manner that connects the dots of applied adhesive around the corners and at the center to one another. Air bubbles should not be let in during this adhesive application. After the adhesive has been applied, the transparent cover plate is reversed to cause the dots of applied adhesive to drip. The reversed transparent cover plate and the flat display are positioned with respect to each other from end to end and side to side, and the dripping adhesive is brought into contact with the flat display at a rate of about 20 µm/sec. while avoiding an impact. The distance between the flat display and the transparent cover plate is also closed at substantially the same rate. At the time the adhesive applied linearly to the transparent cover plate has dripped onto the flat display, the motion of the transparent cover plate is stopped making sure that the correct position is maintained from end to end and side to side. In this state, the adhesive is let drip by its own weight for about 30 to 120 seconds to fill the gap, coating the entire bonding surfaces. After the filling is completed, the adhesive is irradiated with UV for curing the adhesive from the front and sides of the transparent cover plate, whereby the bonding is completed. The adhesive is a UV-curable type adhesive that has a curing shrinkage percentage of about 2%.

### Embodiment 1

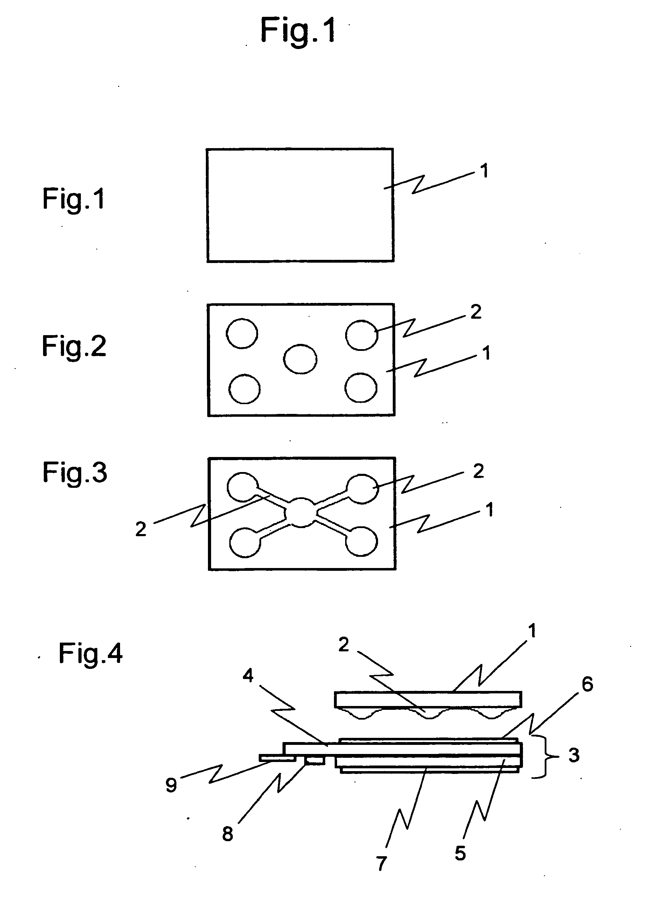

An embodiment of the present invention is described below with reference to the accompanying drawings. FIG. 1 shows a transparent plate 1, which is placed over the entire front surface of a flat display, and is made from an acrylic material. The transparent plate 1 is 1.5 mm in thickness and 40 × 40 mm in size. The display is 45 × 32 mm in external size and 1.3 mm in thickness. The display screen area measures 36 × 28.5 mm. The display, which is denoted by reference numeral 3, is a liquid crystal display. The display screen of the liquid crystal display 3 is bordered by a frame-shaped, black-colored member, which is formed by printing on the display side. The member formed by printing may be layered on a metal film which is formed by sputtering or the like. FIG. 2 is a top view in which an adhesive 2 is applied to a bonding surface of the transparent plate 1 in dots at the corners and the center, five spots in total. The adhesive 2 applied is about 0. 01318 g/cm² with respect to the area of the bonding surface. In this case, the total application amount is 0.1687 g. The amount of the adhesive 2 applied in dots is about 0.028 g per spot. The adhesive 2 is an ultraviolet-curable adhesive, and the characteristics of the adhesive 2 after cured are: elastic modulus = 1.6 × 10⁶ Pa, and refractive index = 1. 52. The adhesive 2 is further applied linearly to connect the dots of the applied adhesive 2 as shown in FIG. 3. In the linear application, the adhesive 2 may be applied to the perimeter of the bonding surface outside the dots of applied adhesive in addition to the areas between the dots of applied adhesive.

Next, as shown in FIG. 4, the transparent plate 1 to which the adhesive 2 has been applied is reversed and positioned with respect to the display 3 maintaining a distance that keeps the adhesive 2 from coming into contact with the display 3. The display 3 includes liquid crystals sealed between a glass substrate 4 on which a TFT array has been formed and a glass substrate 5 on which a color filter has been formed. A display screen-side polarization plate 6 and a rear-side polarization plate 7 are placed on the surfaces of the glass plates 4 and 5. A driver IC 8 which drives the display 3 and an interface FPC which connects to a controller are mounted to the display 3.

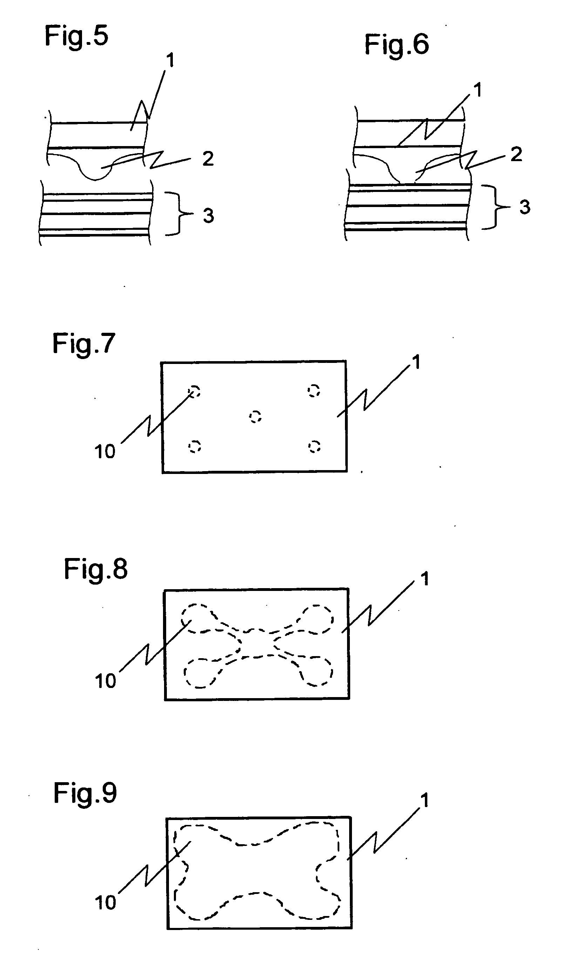

The reversing causes the dots of the applied adhesive 2 to drip as shown in FIG. 5. The transparent plate 1 is lowered at a rate of about 20 µm/sec. to bring the adhesive 2 into contact with the bonding surface of the display 3 in a dot pattern as shown in FIG. 6. The transparent plate 1 preferably descends slowly. If the descent speed is high, the impact of the collision between the adhesive 2 and the bonding surface of the display 3 makes the surface of the adhesive 2 to ripple and lowers the transparent plate 1 further, which may allow multiple air bubbles to form.

The dots of the applied adhesive 2 come into contact with the display 3 and start to smear the display 3. The display 3 viewed from above the transparent plate 1 at this point is shown in FIG. 7, where the display 3 is smeared with dots of adhesive 10. The transparent plate 1 descends further to smear the adhesive in the pattern in which the adhesive has been applied to the transparent plate 1 as shown in FIG. 8. If the transparent plate 1 is freed before the adhesive finishes smearing the display 3 in the applied pattern, air bubbles may form.

In this state, the transparent plate 1 is freed and the adhesive is let drip by its own weight to fill the gap between the transparent plate 1 and the display 3. The gap is filled with the adhesive 10 as shown in FIGS. 9, 10, and 11. The filling takes about 60 seconds, and does not allow air bubbles or air pockets. If pressure is applied, the gap between the transparent plate 1 and the display 3 is filled unevenly with the adhesive. Further, the irregular thickness of the adhesive layer affects a gap between liquid crystals and may make a displayed image or the like look uneven.

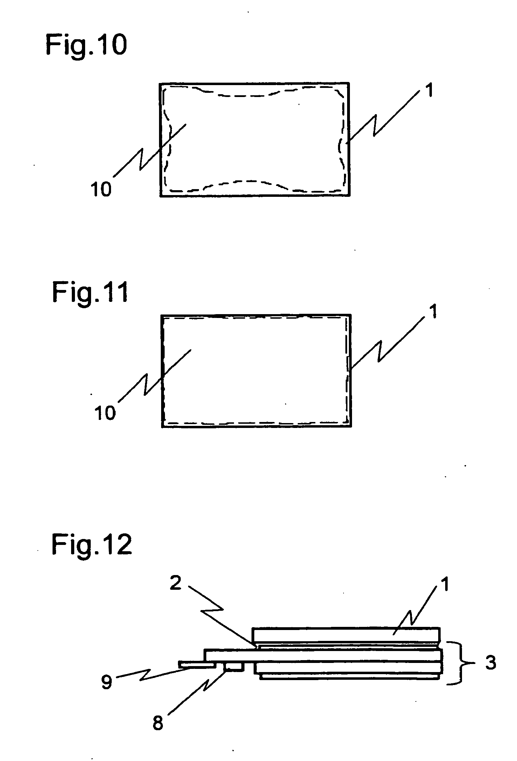

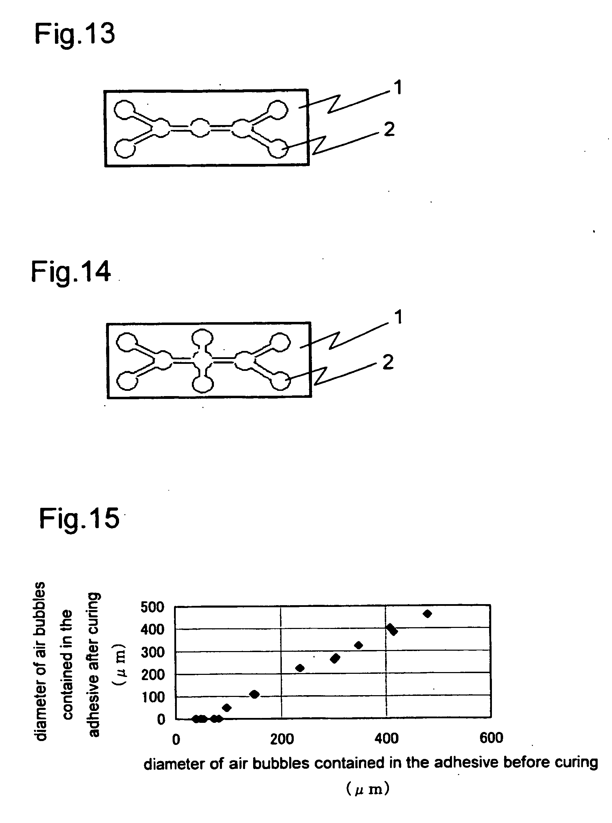

The filling of the gap between the transparent plate 1 and the display 3 is completed as shown in FIG. 12, and then the adhesive is cured by irradiation with ultraviolet rays in a dose of 2,000 mJ/cm² to complete the bonding. The adhesive 2 may be applied to the transparent plate 1 in patterns shown in FIGS. 13 and 14 instead of the pattern shown in FIG. 3. The amount of adhesive applied in dots may be larger at the center than in the corners or, conversely, smaller at the center.

Air bubbles smaller than 100 µm in diameter that are contained in the adhesive 2 before curing can be eliminated through curing by employing an ultraviolet-curable or visible light-curable adhesive that has a curing shrinking percentage of 1 to 6%. As long as air bubbles about 100 µm in diameter or larger are formed during the bonding, the bonded substrates are free from air bubbles. FIG. 15 shows the sizes of air bubbles contained in an adhesive that has a curing shrinkage percentage of 4%.

The transparent substrate may be an analog type touch panel, a capacitive (CAP) touch panel, or a surface acoustic wave (SAW) touch panel. The transparent substrate may also be made of sapphire glass, alkali glass, or soda glass, or reinforced glass of the above, or PMMA or PC, or may be a laminate of the above. The flat display 3 is not limited to the TFT liquid crystal type, and other types of flat display can be employed including STN or other liquid crystal displays, organic EL or inorganic EL displays, and plasma displays. The adhesive 2 may be a visible light-curable type instead of a UV-curable type, or may be a type cured by a combination of UV light and visible light.

The bonding method described above solves the detachment of a transparent cover plate and a flat panel display with age, which is caused by contained air bubbles and the warping of one or both of the bonded members. Also, an adhesive layer containing no air bubbles and having a uniform thickness is obtained. The above bonding method thus makes it possible to thin the gap between the transparent cover plate and the flat panel display to approximately 20 to 30 µm.

## Claims

1. A method of manufacturing a display device in which a polygonal transparent member (1) and a display element (3) are bonded together with a transparent adhesive (2), the method comprising:
applying a fixed amount of a liquid transparent adhesive member (2) to a bonding surface of the polygonal transparent member (1), in a dot shape in multiple spots including spots adjacent each corner of the bonding surface and a spot at the center of the bonding surface;
applying the liquid transparent adhesive member (2) linearly in a manner that connects the dots of applied liquid transparent adhesive member (2), so as to form a diagonal cross shape between the spots adjacent each corner of the bonding surface;
reversing the polygonal transparent member (1) so as to allow the liquid transparent adhesive member (2) applied in dots to drip;
bringing the liquid transparent adhesive member (2) into contact with the bonding surface of the display element (3) while avoiding an impact to the dripping adhesive, to fill a gap between the polygonal transparent member (1) and the display element (3) with the liquid transparent adhesive member (2); and
curing the liquid transparent adhesive member (2).

2. A method of manufacturing a display device according to claim 1,
wherein the polygonal transparent member (1) comprises one of a touch panel, a plastic plate, and a glass plate.

3. A method of manufacturing a display device according to claim 1,
wherein the liquid transparent adhesive member (2) comprises a photo-curing adhesive, which is a UV-curable adhesive, a visible light-curable adhesive or an adhesive cured by a combination of UV and visible light, and
wherein, in the curing of the liquid transparent adhesive member (2), the liquid transparent adhesive member (2) is cured by two different curing means including a first curing means for irradiating the liquid transparent adhesive member (2) with first light through the polygonal transparent member (1) and a second curing means for directly irradiating the liquid transparent adhesive member (2) with second light from a direction of a side surface of the polygonal transparent member (1).

## Patentansprüche

1. Verfahren zum Herstellen einer Anzeigevorrichtung, in der ein polygonales transparentes Element (1) und ein Anzeigeelement (3) mit einem transparenten Haftmittel (2) aneinander gebunden sind, wobei das Verfahren umfasst:
Aufbringen einer festgelegten Menge eines flüssigen transparenten Haftmittelelements (2) auf eine Bindungsoberfläche des polygonalen transparenten Elements (1) in einer Punktform mit mehreren Tupfen, einschließlich Tupfen neben jeder Ecke der Bindungsoberfläche und eines Tupfens in der Mitte der Bindungsoberfläche;
Aufbringen des flüssigen transparenten Haftmittelelements (2) linear in derartiger Weise, dass die Punkte des aufgebrachten flüssigen transparenten Haftmittelelements (2) verbunden sind, so dass eine diagonale Kreuzform zwischen den Tupfen neben jeder Ecke der Bindungsoberfläche gebildet wird;
Umkehren des polygonalen transparenten Elements (1), so dass das flüssige transparente Haftmittelelement (2), das in Punkten aufgebracht ist, tropft;
In-Kontakt-Bringen des flüssigen transparenten Haftmittelelements (2) mit der Bindungsoberfläche des Anzeigeelements (3), während eine Einwirkung auf das tropfende Haftmittel vermieden wird, um einen Spalt zwischen dem polygonalen transparenten Element (1) und dem Anzeigeelement (3) mit dem flüssigen transparenten Haftmittelelement (2) zu füllen; und
Härten des flüssigen transparenten Haftmittelelements (2).

2. Verfahren zum Herstellen einer Anzeigevorrichtung nach Anspruch 1,
wobei das polygonale transparente Element (1) eines von einem interaktiven Bedienfeld, einer Kunststoffplatte und einer Glasplatte umfasst.

3. Verfahren zum Herstellen einer Anzeigevorrichtung nach Anspruch 1,
wobei das flüssige transparente Haftmittelelement (2) ein lichthärtendes Haftmittel umfasst, das ein UVhärtbares Haftmittel, ein durch sichtbares Licht härtbares Haftmittel oder ein Haftmittel, das durch eine Kombination von UV und sichtbarem Licht gehärtet wird, ist, und
wobei beim Härten des flüssigen transparenten Haftmittelelements (2) das flüssige transparente Haftmittelelement (2) durch zwei verschiedene Härtungsmittel gehärtet wird, einschließlich eines ersten Härtungsmittels zum Bestrahlen des flüssigen transparenten Haftmittelelements (2) mit erstem Licht durch das polygonale transparente Element (1) und eines zweiten Härtungsmittels zum direkten Bestrahlen des flüssigen transparenten Haftmittelelements (2) mit zweitem Licht aus einer Richtung einer Seitenfläche des polygonalen transparenten Elements (1).

## Revendications

1. Procédé de fabrication d'un dispositif d'affichage où un élément transparent polygonal (1) et un élément d'affichage (3) sont collés ensemble avec un adhésif transparent (2), le procédé comprenant :
l'application d'une quantité fixe d'élément adhésif transparent liquide (2) sur une surface de collage de l'élément transparent polygonal (1), sous forme de point en de multiples tâches comprenant des tâches adjacentes à chaque angle de la surface de collage et une tâche au centre de la surface de collage ;
l'application de l'élément adhésif transparent liquide (2) linéairement de façon à relier les points d'élément adhésif transparent liquide (2), de manière à former une forme en croix diagonale entre les tâches adjacentes à chaque angle de la surface de collage;
la mise en sens inverse de l'élément transparent polygonal (1) de manière à permettre l'égouttage de l'élément adhésif transparent liquide (2) appliqué par points ;
la mise en contact de l'élément adhésif transparent liquide (2) avec la surface de collage de l'élément d'affichage (3) tout en évitant d'impacter l'adhésif qui s'égoutte, afin de remplir un espace entre l'élément transparent polygonal (1) et l'élément d'affichage (3) avec l'élément adhésif transparent liquide (2); et
le traitement de l'élément adhésif transparent liquide (2).

2. Procédé de fabrication d'un dispositif d'affichage selon la revendication 1,
l'élément transparent polygonal (1) comprenant l'un ou l'autre parmi un écran tactile, une plaque en plastique et une plaque en verre.

3. Procédé de fabrication d'un dispositif d'affichage selon la revendication 1,
l'élément adhésif transparent liquide (2) comprenant un adhésif de photo réticulation ou un adhésif traité grâce à une combinaison entre des UV et de la lumière visible, et
lors du traitement de l'élément adhésif transparent liquide (2), l'élément adhésif transparent liquide (2) étant traité grâce à deux moyens de traitement différents comprenant un premier moyen de traitement pour irradier l'élément adhésif transparent liquide (2) avec une première lumière à travers l'élément transparent polygonal (1) et un deuxième moyen de traitement pour directement irradier l'élément adhésif transparent liquide (2) avec une deuxième lumière provenant d'une direction d'une surface latérale de l'élément transparent polygonal (1).
